# EUROPEAN PATENT SPECIFICATION

(11) **EP 1 475 297 B1**
(45) Date of publication and mention of the grant of the patent: **10.10.2007**
(21) Application number: 04445056.7
(22) Date of filing: 07.05.2004
(51) Int. Cl.: B62D 51/04

(54) **Safety arrangement at picking truck following a walking person**
Sicherheitseinrichtung für einen handgeführten, selbstfahrenden Kleinlastwagen
Dispositif de sécurité pour un chariot mené par un conducteur marchant

(30) Priority: 08.05.2003 SE 0301345
(43) Date of publication of application: 10.11.2004
(73) Proprietor: BT INDUSTRIES AB, 59581 Mjölby (SE)
(72) Inventor: Carlsson, Magnus, 590 74 Vikingstad (SE); Wernborg, Sven-Erik, 595 32 Mjölby (SE); Svartling, Cecilia, 595 33 Mjölby (SE)
(74) Representative: Berglund, Erik Wilhelm

(56) References cited:
- US-A- 4 036 323
- US-A- 4 336 858
- US-A- 4 386 674
- US-A- 6 094 897

## Description

This invention is related to picking trucks of the kind that includes a platform or the like for the driver to stand on at the travel of the truck. If the places where the merchandize is to be collected are close to each other this either result in several short walks or little short travels of the truck. In order not to necessitate for the driver to climb onto the truck for these short travels it is known to arrange additional controls on the sides of the truck for the moving straight forward of the truck with reduced speed without the driver climbing up on the truck. For instance the available maximum speed is reduced to half the normally available maximum speed. The reason for this is the security aspect since one does not want the driver run into himself or be jammed by his own truck.

Even if the above solution makes the use of trucks of this kind more efficient it has the drawback that the truck before you start a series of movements with the driver walking at the side must be adjusted to be comparatively parallel to the store alley so that the driver does not have to climb up on the truck in order to steer it right alternatively to risk that the available walking space at the side of the truck is constantly reduced thereby giving the driver a space for movement that is too narrow for the driver at the picking, with resulting lack of ergonomics for lifting on and off.

An attempt to remedy the above problems is shown in US 5,117,944 and corresponds to the preamble of claim 1.

The object of the invention is further to improve the efficiency of picking trucks with a place for the driver to stand. In accordance with the invention this is achieved by the truck in a normal way being provided with sensor means that when the driver leaves his place on the truck initiate a reduction of the maximum available travel speed, for instance half. Steering is still allowed but the maximum travel speed is reduced as a function of the steering movement and when a defined limit angle has been reached no further turning is allowed.

Furthermore the truck is arranged so that the truck continue with unaltered speed if the driver step up on it when it is already in motion and that some additional measure, for instance that the speed control is returned to its zero position, even if very quickly, is required for returning the truck to the normal drive state when the driver is on the platform.

As an alternative to the above instead or additionally the turning speed of the steering is reduced as a function of the steering angle measured from the center position. Preferably also the maximally possible steering angle is reduced. The risks for the driver can in this way be kept small at the same time as the flexibility gets better.

Within the concept of the invention both of the above alternatives can be combined with each other so that both the maximal travel speed and the maximum steering angle speed are limited as a function of the steering angle from the center position. In this way only a very slow movement is allowed laterally, which considerably lessens the risk that the driver is jammed or drives over his own feet by mistake.

The maximum turning speed of the steering movement can be reduced in one step when the driver leaves his place on the truck and/or successively with the steering angle.

In a preferable further development of the inventive thought only a limited steering angle is allowed to each side, for instance 30° and advantageously available maximum travel speed is reduced to zero at the same angle.

Within the inventive thought one could also consider letting maximum steering angle speed and value be a function of the travel speed, so that a lower used travel speed allows a larger turn angle speed and/or a larger maximum steering angle. In this way the manouverablility of the truck is increased without compromising the security. By lowering the used speed a larger steering angel can thus be used more or less temporarily for required course correction.

The reduction of travel speed and/or steering angle speed can be stepwise or along some suitable graph. Advantageously the speed of the truck can be reduced in one step when the driver gets off, for instance halved if the truck at the dismounting had the steering wheel adjusted for movement straight forward and more if steering still takes place at the dismounting.

At the invention advantageously the same steering means are used when the driver is at the side of the truck as well as when he stands on the truck. By letting the truck retain the low maximum travel speed and/or steering angle speed that is used when maneuvering from the side, even if the driver steps up on the truck, until its drive control has been returned to its zero position, jerks are avoided when the driver steps up on the truck from walking and steering beside it.

Through the invention the truck becomes both easier to steer and use and more ergonomic at the same time as the security increase.

## Claims

1. Picking truck with travel platform or the like for the driver, which truck is provided with a sensor for detecting if the driver is on the platform or not, the truck is arranged to allow driving also when the driver has stepped off, **characterized in that** the truck is provided with a sensor for the steering angle and so arranged that when the driver has stepped down from the platform the maximum permissible travel speed is reduced stepwise in two or several steps or along a graph, where the maximum permissible travel speed of the truck is reduced with a steering angle increasing from a center position corresponding to traveling straight forward, the truck being so arranged that the permissible maximum travel speed of the truck with dismounted driver and a steering angle in excess of a defined steering angle, for instance 30°, is zero, that is no travel is permitted, the truck being so arranged that the truck continues with unaltered speed if the driver steps up on it when it is already in motion and that some additional measure, for instance that the speed control is returned to its zero position, even if very quickly, is required for returning the truck to the normal drive state when the driver is on the platform.

2. Picking truck with a travel platform or the like for the driver, which truck is arranged with a sensor for detecting if the driver is on the platform or not, which truck is arranged to allow driving also when the driver has stepped down, **characterized in that** the truck is provided with a sensor for the steering angle and so arranged that when the driver has stepped down from the platform the maximally permitted steering angle speed stepwise or along a graph is reduced as a function of increasing steering angle and/or speed.

3. Picking truck according to claim 2, **characterized in that** it is so arranged that when the driver has stepped off and a defined steering angle has been reached, for instance 30°, no larger steering angle is permitted.

## Patentansprüche

1. Kleinlastwagen mit einer Fahrplattform oder dergleichen für den Fahrer, wobei der Lastwagen mit einem Sensor ausgestattet ist, um zu erkennen, ob der Fahrer auf der Plattform ist oder nicht, der Lastwagen ist so gestaltet, daß es möglich ist, zu fahren, auch wenn der Fahrer ausgestiegen ist, charakterisiert **dadurch**, daß der Lastwagen mit einem Sensor für den Lenkeinschlag ausgestattet ist und so gestaltet ist, daß, wenn der Fahrer von der Plattform hinabgestiegen ist, die maximale erlaubte Fahrgeschwindigkeit schrittweise in zwei oder mehreren Schritten oder entlang einer Kurve reduziert wird, wobei die maximal erlaubte Fahrgeschwindigkeit des Lastwagens reduziert wird, einhergehend mit einem zunehmenden Lenkeinschlag von einer Mittelstellung, die einem Geradeausfahren entspricht, reduziert wird, der Lastwagen ist so gestaltet, daß die erlaubte Fahrgeschwindigkeit des Lastwagens mit einem abgestiegenen Fahrer und einem Lenkeinschlag höher als einem definierten Lenkeinschlag, zum Beispiel 30°, gleich Null ist, daß heißt, daß kein Fahren möglich ist, der Lastwagen ist so gestaltet, daß der Lastwagen mit unveränderter Geschwindigkeit fortfährt, wenn der Fahrer aufsteigt, wenn er bereits in Bewegung ist und daß eine zusätzliche Maßeintrichtung, zum Beispiel, daß die Geschwindigkeitskontrolle auf ihre Nullstellung zurückkehrt, gerade wenn es sehr schnell nötig ist, erforderlich ist, um den Lastwagen auf den normalen Fahrzustand zurückzuführen, wenn der Fahrer auf der Plattform ist.

2. Kleinlastwagen mit einer Fahrplattform oder dergleichen für den Fahrer, wobei der Lastwagen mit einem Sensor ausgestattet ist, um zu erkennen, ob der Fahrer auf der Plattform ist oder nicht, der Lastwagen ist so gestaltet, daß es möglich ist, zu fahren, auch wenn der Fahrer ausgestiegen ist, charakterisiert **dadurch**, daß der Lastwagen mit einem Sensor für den Lenkeinschlag ausgestattet ist und so gestaltet ist, daß, wenn der Fahrer von der Plattform hinabgestiegen ist, der maximal erlaubte Lenkeinschlag schrittweise oder entlang einer Kurve als eine Funktion des ansteigenden Lenkeinschlags und/oder der Geschwindigkeit reduziert wird.

3. Kleinlastwagen nach Anspruch 2, charakterisiert **dadurch**, daß er so gestaltet ist, daß, wenn der Fahrer ausgestiegen ist und ein definierter Lenkeinschlag erreicht wurde, zum Beispiel 30°, kein größerer Lenkeinschlag möglich ist.

## Revendications

1. Chariot d'assistance à plate-forme mobile ou similaire pour le conducteur, lequel chariot est muni d'un capteur pour détecter si le conducteur est ou non sur la plate-forme, le chariot est agencé pour permettre la conduite également lorsque le conducteur est descendu, **caractérisé en ce que** le chariot est muni d'un capteur pour l'angle de braquage et agencé de sorte que lorsque le conducteur est descendu de la plate-forme la vitesse de déplacement maximale autorisée du chariot soit réduite par paliers en deux ou plusieurs étapes ou selon un graphique, où la vitesse de déplacement maximale autorisée du chariot est réduite avec un angle de braquage augmentant depuis une position centrale correspondant à un déplacement vers l'avant, le chariot étant agencé de sorte que la vitesse de déplacement maximale autorisée du chariot avec un conducteur marchant et un angle de braquage supérieur à un angle de braquage défini, par exemple 30°, est de zéro c'est-à-dire qu'aucun déplacement n'est autorisé, le chariot étant agencé de sorte que le chariot continue à une vitesse non modifiée si le conducteur monte dessus lorsqu'il est déjà en mouvement et que quelques mesures additionnelles, par exemple que le contrôle de vitesse est ramené à sa position zéro, même si c'est très rapidement, sont requises afin de ramener le chariot dans l'état de conduite normal lorsque le conducteur est sur la plate-forme.

2. Chariot d'assistance à plate-forme mobile ou similaire pour le conducteur, lequel chariot est muni d'un capteur pour détecter si le conducteur est ou non sur la plate-forme, lequel chariot est agencé pour permettre la conduite également lorsque le conducteur est descendu, **caractérisé en ce que** ledit chariot est muni d'un capteur pour l'angle de braquage et agencé de sorte que lorsque le conducteur est descendu de la plateforme la vitesse de l'angle de braquage maximale autorisée par paliers ou suivant un graphique est réduite comme une fonction de l'augmentation de l'angle de braquage et/ou de la vitesse.

3. Chariot d'assistance conformément à la revendication 2, **caractérisé en ce qu'**il est agencé de sorte que lorsque le conducteur est descendu et qu'un angle de braquage défini a été atteint, par exemple 30°, aucun angle de braquage plus élevé n'est autorisé.
